# EUROPEAN PATENT SPECIFICATION

(11) **EP 3 240 276 B1**
(45) Date of publication and mention of the grant of the patent: **22.05.2019**
(21) Application number: 16167713.3
(22) Date of filing: 29.04.2016
(51) Int. Cl.: H04M 9/08

(54) **DEVICE AND METHOD FOR CANCELING NOISE IN A RECEIVED SIGNAL**
VORRICHTUNG UND VERFAHREN ZUR UNTERDRÜCKUNG VON RAUSCHEN IN EINEM EMPFANGENEN SIGNAL
DISPOSITIF ET PROCÉDÉ D'ANNULATION DU BRUIT DANS UN SIGNAL REÇU

(43) Date of publication of application: 01.11.2017
(60) Divisional application: 19158725.2
(73) Proprietor: Intel Corporation, Santa Clara, CA 95054 (US)
(72) Inventor: SURESH, Krishna Swamy, 560013 Bangalore (IN); DASALUKUNTE, Deepak, 560040 Bangalore (IN); BHATIA, Puneet, 560017 Bangalore (IN); KOLENDAVELU, Manivannan, 560102 Bangalore (IN)
(74) Representative: Sticht, Andreas

(56) References cited:
- EP-A1- 2 466 757
- WO-A1-2011/077430
- CENDRILLON R ET AL: "Partial crosstalk cancellation for upstream VDSL", EURASIP JOURNAL OF APPLIED SIGNAL PROCESSING, HINDAWI PUBLISHING CO., CUYAHOGA FALLS, OH, US, vol. 2004, no. 10, 15 August 2004 (2004-08-15), pages 1520-1535, XP002456935, ISSN: 1110-8657, DOI: 10.1155/S1110865704309273

## Description

### TECHNICAL FIELD

Present invention relates to a device and to a method arranged to cancel noise in a received signal. Additionally, the present invention relates to a corresponding computer program product and to a corresponding computer-readable recording media.

### BACKGROUND

In the area of communication technology, when voice or sound signals are transmitted, unwanted sound signals referred to as noise are added to the original voice or sound signal. Different sources of noise are present. They may comprise, for example, environment noise or noise occurring during the signal transmission, e.g. cross talk noise.

Several method for canceling noise exist. One of them is active noise cancellation (ANC) or active noise reduction (ANR) that reduces noise by adding an anti-noise signal such that the noise signal is canceled. A commonly used algorithm for ANC is least mean square (LMS) or delayed LMS. The hardware/software architecture used for execution of this algorithm comprises memories, used to store input data (victims and disturbers) and coefficients used for filtering and cancelling the noise, and multiply-and-accumulate (MAC) units for computation of the anti-noise signal and for adding the anti-noise signal to the victim data.

However, the ANC approach is application specific. For high performance applications like Broadband, hardware accelerators are used. Additionally, also digital signal processors (DSPs) are used in case of low performance applications such as wind noise cancellation in mobile phones, for example.

WO 2011/077430 A1 discloses a device according to the preamble of claim 1.

Thus, a need for a more generic and application independent noise cancellation technique still exists.

### SUMMARY

A device as defined in claim 1 and a method as defined in claim 11 are provided.

The present invention provides an improved noise cancellation technique. In particular, a more generic and application independent noise cancellation is enabled.

The general idea of the present invention is to provide a device that functions as a hardware accelerator and, thus, achieves high performance, low power consumption and application independent ANC. For low performance applications, the device can be used as a hardware accelerator that has small area footprint and that has a low power consumption.

Objects and advantages of the present invention are achieved by subject matters of independent claims, wherein further exemplary and supplementing embodiments are specified in dependent claims as well as in the present description and attached figures.

In particular, the present invention refers to a device arranged to cancel noise present in received signals, wherein the device comprises a number of sets of multiply-and-accumulate units, wherein: each set of multiply-and-accumulate units of the number of sets of multiply-and-accumulate units is configured to cancel noise with regard to a corresponding victim that is a line affected adversely by the noise, or each set of multiply-and-accumulate units of the number of sets of multiply-and-accumulate units is configured to cancel noise with regard to a corresponding received signal comprising noise; wherein the number of sets of multiply-and-accumulate units corresponds to a maximum number of victims that the device is configured to process during a same noise cancellation process or to a maximum number of received signals comprising noise that the device is configured to process during the same noise cancellation process.

According to an embodiment, the device is a hardware accelerator or is incorporated in a hardware accelerator.

The terms "victim", "disturber" and "tone" are used in the present application as generally understood by a skilled person. Thus, the term "victim" refers to a component (e.g., a communication media (e.g., line, channel etc.) or circuit) that is examined with regard to presence of noise on a line whose signal is adversely affected by the noise. The term "disturber" describes the source of the noise in a victim. The term "tone" refers to frequency at which a signal comprising noise is received and denotes a frequency band or frequency range. Generally, noise is canceled with regard to disturbers occurring on a specific tone for a given victim.

According to an embodiment, the device comprises at least one of the following: a number of coefficient memories, a number of disturber memories and a number of victim memories, wherein the number of coefficient memories, the number of disturber memories and the number of victim memories correspond to the maximum number of victims and wherein each of the number of coefficient memories, the number of disturber memories and the number of victim memories is associated with a corresponding victim.

According to another embodiment, the device comprises at least one of the following: a number of coefficient memories and a number of noisy signal sample memories, wherein the number of coefficient memories and the number of noisy signal sample memories correspond to the maximum number of received signals comprising noise and wherein each of the number of coefficient memories and the number of sample memories is associated with a corresponding received signal comprising noise.

According to an embodiment, if each set of multiply-and-accumulate units of the number of sets of multiply-and-accumulate units is configured to cancel noise with regard to a corresponding victim: each coefficient memory of the number of coefficient memories comprises a set of coefficient memory blocks, wherein each coefficient memory block comprises a set of noise cancellation coefficients configured to cancel noise in a received signal with regard to a corresponding tone of the corresponding victim and wherein each disturber memory block comprises a set of disturbers of a corresponding tone of the corresponding victim.

According to another embodiment, if each set of multiply-and-accumulate units of the number of sets of multiply-and-accumulate units is configured to cancel noise with regard to a corresponding received signal comprising noise, each coefficient memory of the number of coefficient memories comprises two coefficient memory blocks.

According to an embodiment, the device comprises a number of interpolation units, wherein the number of interpolation units corresponds to the maximum number of victims and wherein each of the number of interpolation units is associated with a corresponding victim and is configured to generate a corresponding set of noise cancellation coefficients for noise cancellation in the corresponding victim by interpolating a base set of noise cancellation coefficients.

According to an embodiment, each coefficient memory block of a coefficient memory of the number of coefficient memories comprises a base set of coefficient memory blocks.

According to an embodiment, each set of multiply-and-accumulate units, associated with a corresponding victim, is configured to receive the set of noise cancellation coefficients from an interpolation unit associated with the corresponding victim.

According to an embodiment, each multiply-and-accumulate unit of each set of multiply-and-accumulate units, associated with a corresponding victim, is configured to cancel noise with regard to a particular tone of the corresponding victim.

According to an embodiment, each multiply-and-accumulate unit of each set of multiply-and-accumulate units, associated with a corresponding victim, is configured to receive disturbers, with regard to which noise cancelation is executed by the corresponding multiply-and-accumulate unit, from a disturber memory of the number of disturber memories that is associated with the corresponding victim.

According to an embodiment, each multiply-and-accumulate unit of each set of multiply-and-accumulate units, associated with a corresponding received signal comprising noise, is configured to receive a noise cancelation coefficients alternately from a first or from a second coefficient memory block of the two coefficient memory blocks of the coefficient memory associated with the corresponding received signal comprising noise.

According to an embodiment, each multiply-and-accumulate unit of each set of multiply-and-accumulate units associated with a corresponding received signal comprising noise is configured to receive samples of the received signal from the noisy sample memory associated with the received signal.

According to an embodiment, the device comprises a configuration unit arranged to select at least one of the following and to configure the device by use of at least one of the following: a (maximum) number of victims, with regard to which the device can execute the cancellation of noise during the same noise cancellation process; a (maximum) number of tones, with regard to which the device can execute the cancelation of noise during the same noise cancellation process; a (maximum) number of disturbers, with regard to which the device can execute the cancelation of noise during the same noise cancellation process; a (maximum) number of received signals comprising noise, with regard to which the device can execute the cancellation of noise during the same noise cancellation process; an interpolation factor; an interpolation mode; a precision degree of data to be supported by the device; settings for compression of data when said data is stored in the device and settings for decompression of stored data when said stored data is used in the device.

Present invention refers also to a method arranged to cancel noise present in received signals, wherein the method comprises steps of: canceling noise, by a number of sets of multiply-and-accumulate units, wherein: each set of multiply-and-accumulate units of the number of sets of multiply-and-accumulate units cancels noise with regard to a corresponding victim that is a line affected adversely by the noise, or each set of multiply-and-accumulate units of the number of sets of multiply-and-accumulate units cancels noise with regard to a corresponding received signal comprising noise; wherein the number of sets of multiply-and-accumulate units corresponds to a maximum number of victims that can be processed during a same noise cancellation processor to a maximum number of received signals comprising noise that can be processed during the same noise cancellation process. In particular, the method comprises steps executed by device as introduced above and explained in more detail below. Thus, the steps of the method correspond or comprise steps or actions executed by said device.

The present invention corresponds also to a computer program product comprising computer readable program code that is configured to cause a computing device to execute steps of the above-mentioned method. According to an embodiment, the computer readable program code is embodied in a computer-readable medium. According to a further embodiment, the computer-readable medium is a non-transitory computer-readable medium. According to an embodiment, the computing device is a processor or any other computer configured to execute computer readable program code.

Furthermore, the present invention refers also to a computer-readable recording medium configured to store therein the above-introduced computer program product. According to an embodiment, the computer-readable medium is a non-transitory computer-readable medium.

As can be gathered from the aforesaid and as shown in more detail below, the present invention provides advantages of a generic and scalable architecture by usage of parameters such as (maximum) numbers of victims, disturbers, tones and/or received signals that may be processed during the same noise cancellation process. Said architecture allows an application independent noise cancelation in received signals. Furthermore, varying numbers of victims, disturbers and received signals can be handled in an easy and efficient way. Further, the present invention refers to a cascaded approach that allows implementation of higher degrees noise cancellation systems, i.e. systems capable of handling more disturbers. The design of the present approach is capable to support different user specific algorithm designs. Moreover, a dynamic approach is presented that allows dynamic update of coefficients and parameters used. Furthermore, a single solution for time domain noise filtering and frequency domain noise cancellation is allowed.

It has to be noted that the disclosed embodiments can be combined with each other and are not intended for an individual consideration and implementation.

### BRIEF DESCRIPTION OF THE DRAWINGS

In the following, embodiments of the present invention are described with reference to accompanying drawings in which the same or similar reference numerals designate the same or similar elements.
FIG. 1 is a block diagram of a device arranged to cancel noise present in a received signal according to an embodiment of the present invention.
FIG. 2 is a block diagram of a coefficient memory according to an embodiment of the present invention.
FIG. 3 is a block diagram of a disturber memory according to an embodiment of the present invention.
FIG. 4 is a block diagram of a set of MAC units according to an embodiment of the present invention.
FIG. 5 is a block diagram of a device arranged to cancel noise present in a received signal according to an embodiment of the present invention.
FIG. 6 is a block diagram of a coefficient memory according to an embodiment of the present invention.

### DETAILED DESCRIPTION OF EMBODIMENTS

In the following, exemplary embodiments of the present invention are described with reference to the attached drawings. Features of the various exemplary embodiments may be combined with each other unless specifically stated otherwise.

As can be gathered from the above summary, the present invention allows a dynamic use of parameters for cancelation of noise present in a received signal. In particular, noise cancellation coefficients are provided to a multiply-and-accumulate unit according to settings and/or configurations of a device. The settings/configurations comprise, in particular, a set of victims (at least one victim) selected from a plurality of victims, a set of disturbers (at least one disturber) selected from a plurality of disturbers and/or a set of tones (at least one tone) selected from a plurality of tones, wherein the victim(s), disturber(s) and tone(s) are capable of causing noise in a transmitted and subsequently received signal. Thus, a plurality of different potential sources of noise are considered. The received signal is processed with regard to selected potential sources of noise, wherein, with regard to each of the different potential sources as selected, a multiply-and-accumulate (MAC) unit executes a noise cancelation by generating a corresponding noise cancelation signal.

The settings/configuration can be changed, adapted and/or updated as required. I.e., the device arranged to cancel noise present in a received signal can be re-configured again and again with regard to current circumstances that may cause noise. The selection of the potential sources of noise is executed in an application-independent way.

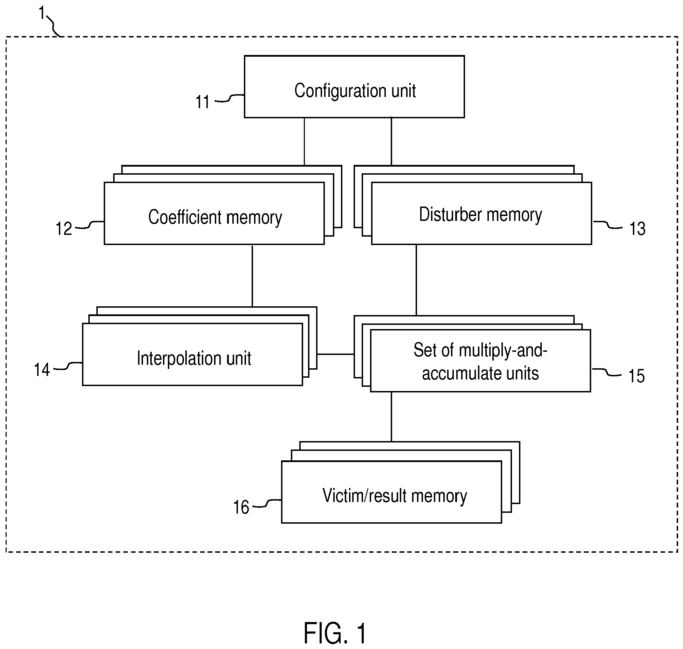

FIG. 1 is a block diagram of device 1 arranged to cancel noise present in a received signal according to an embodiment of the present invention.

According to the embodiment of FIG. 1, device 1 comprises a configuration unit 11 that prepares device 1 for noise cancellation in received signals according to a desired configuration. In particular, configuration unit 11 is configured to perform a base configuration and/or re-configuration of device 1. According to the present embodiment, configuration unit 11 is configured to select at least one of the following and to configure device 1 by use of at least one of the following: a (maximum) number of victims, with regard to which device 1 can execute the cancellation of noise during the same noise cancellation process; a (maximum) number of tones, with regard to which device 1 can execute the cancelation of noise during the same noise cancellation process; a (maximum) number of disturbers, with regard to which device 1 can execute the cancelation of noise during the same noise cancellation process; an interpolation factor; an interpolation mode; a precision degree of data to be supported by device 1; settings for compression of data when said data is stored in device 1 and settings for decompression of stored data when said stored data is used in device 1.

The precision degree specifies a computer number format for occupying a particular number of bytes or bits in memory and for representing a wide, dynamic range of values by using a floating point. Such computer number formats are well known. For example, a full precision (32 bit) or half precision (16 bit) format can be selected by configuration unit 1 for computations executed by device 1 (e.g. interpolation unit 14 and/or multiply-and-accumulate (MAC) unit 15. Settings for compression and decompression of data can be selected, if a memory space saving storage of data in device 1 is desired, according to which data to be stored is compressed and stored data is decompressed for further processing.

After the execution of the settings, the configuration unit 11 configures or re-configures, i.e. adjusts device 1 and, in particular, further components of device 1 according to the settings such that subsequent noise cancellation is executed in device 1 by use of said settings. As can be gathered from Fig. 1, said settings configure the operating of coefficient memories 12, disturber memories 13, interpolation units 14, sets of MAC units 15 and victim/result memories 16.

According to embodiment of FIG. 1, noise cancelation is executed on victim basis. This means that victims define the organization of data like disturbers and coefficients, and the execution of noise cancellation is executed with regard to each victim of a number of victims separately. The (maximum) number of victims that may be handled by device 1 during the same noise cancellation process can be set during the configuration process. In particular, said setting of the (maximum) number of victims and the corresponding configuration of device 1 are executed by configuration unit 11.

For executing a victim based noise cancelation, according to the present embodiment, a dedicated memory for every victim of said number of victims is used. Thus, a number of coefficient memories 12 is provided, wherein each coefficient memory 12 stores noise cancellation coefficients of a corresponding victim. Similarly, a number of disturber memories 13 is provided, wherein each disturber memory 13 stores information on disturbers of a corresponding victim. Additionally, a number of victim/result memories 16 is provided, wherein each victim/result memory 16 stores victim data and results of noise cancellation of a corresponding victim. According to an embodiment, the distribution and/or allocation of corresponding disturber memories 13 and coefficient memories 12 can be done after or during the configuration process executed by the configuration unit 11 in response to the set maximum number of victims that may be handled by device 1 during the same noise cancellation process.

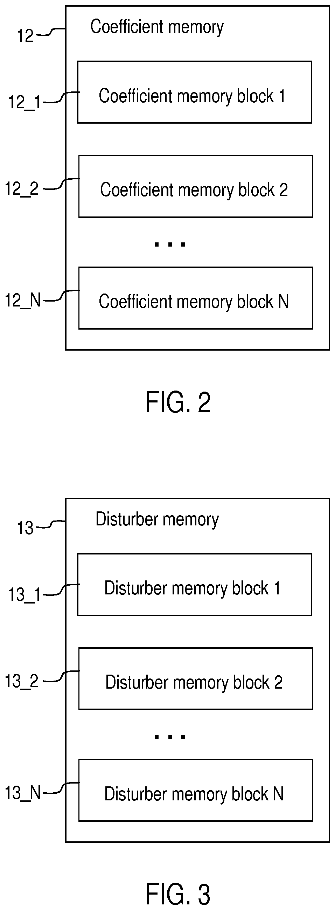

FIG. 2 is a block diagram of coefficient memory 12 of the number of coefficient memories according to an embodiment of the present invention.

According to the embodiment of FIG. 2, coefficient memory 12 comprises a set of coefficient memory blocks or buffers 12_1, 12_2, ..., 12_N. In each coefficient memory block 12_1, 12_2, ..., 12_N, a base set of noise cancellation coefficients is stored that is used for noise cancellation. The noise cancellation coefficients are grouped according to tones of the victim, with regard to which coefficient memory 12 is provided. Thus, each buffer 12_1, 12_2, ..., 12_N comprises a base set of coefficients for noise cancellation with regard to a corresponding or particular tone of the victim, with regard to which coefficient memory 12 is used or with which coefficient memory 12 is associated.

Thus, the number N of coefficient memory blocks 12_1, 12_2, ..., 12_N corresponds or is equal the number of tones of the corresponding victim. In general, N is a natural that is equal or greater than one (N ≥ 1). The maximum number of tones that can be handled by device 1 with regard to a victim can be set and configured via the configuration unit 11. Hence, according to an embodiment, the distribution and/or allocation of corresponding coefficient memory blocks 12_1, 12_2, ..., 12_N can be done after or during the configuration process executed by the configuration unit 11 in response to the set maximum number of tones that may be handled by device 1 for a victim during the same noise cancellation process.

FIG. 3 is a block diagram of disturber memory 12 of the number of disturber memories according to an embodiment of the present invention.

According to the embodiment of FIG. 3, disturber memory 13 comprises a set of disturber memory blocks or buffers 13_1, 13_2, ..., 13_N. In each disturber memory block 13_1, 13_2, ..., 13_N, a set of disturbers is stored that is used for noise cancellation. According to an embodiment, the size of the set of disturbers is limited by a maximum number of disturbers. According to an embodiment, the maximum number of disturbers is set by configuration unit 11. The disturbers are grouped according to tones of the victim, with regard to which disturber memory 13 is provided. Thus, each buffer 13_1, 13_2, ..., 13_N comprises a set of disturbers of a corresponding or particular tone of the victim, with regard to which disturber memory 13 is used or with which disturber memory 13 is associated.

Thus, the number N of disturber memory blocks 13_1, 13_2, ..., 13_N corresponds or is equal the number of tones of the corresponding victim. In general, N is a natural that is equal or greater than one (N ≥ 1). As mentioned, the maximum number of tones that can be handled by device 1 with regard to a victim can be set and configured via the configuration unit 11. Hence, according to an embodiment, the distribution and/or allocation of corresponding disturber memory blocks 13_1, 13_2, ..., 13_N can be done during the configuration process executed by the configuration unit 11 in response to the set maximum number of tones that may be handled by device 1 for a victim during the same noise cancellation process.

In order to keep the storage requirement for the noise cancellation coefficients low and thus to save required memory space, according to the present embodiment, the noise cancellation coefficients stored in coefficient memories 13 are decimated to base or grid noise cancellation coefficients, and an interpolation unit 14 is used for the regeneration of the intermediate noise cancellation coefficients, i.e. noise cancellation coefficients that are placed between the base noise cancellation coefficients. As generally known, interpolation is a method of constructing new data points within the range of a discrete set of known data points. Thus, according to the present embodiment interpolation unit 14 uses a base set of noise cancellation coefficients for generating or constructing further intermediate noise cancellation coefficients. Between two base noise cancellation coefficients, one or more intermediate noise cancellation coefficients are present. Interpolation unit 14 determines said intermediate cancellation coefficients.

Thus, according to present embodiment, corresponding sets of base or grid noise cancellation coefficients are stored in coefficient memories 12. Interpolation unit 14 regenerates, i.e. interpolates intermediate noise cancellation coefficients from a base or grid set of noise cancellation coefficients. Subsequently, the noise cancellation is executed by use of a set of noise cancellation coefficients comprising both the base set of noise cancellation coefficients and the corresponding set of interpolated or intermediate noise cancellation coefficients.

Interpolation unit 14 fetches or retrieves a base or grid set of noise cancellation coefficients from coefficient memory 12 and generates interpolated coefficients according to an interpolation factor. According to an embodiment, the interpolation factor is configured by configuration unit 11 such that interpolation unit 14 uses the interpolation factor as set during the configuration process. For example, if interpolation factor is 8, interpolation unit 14 generates 8 interpolated noise cancellation coefficients with regard to two base or grid noise cancellation coefficients. According to an embodiment, interpolation unit functions according to a particular interpolation mode. Also the interpolation mode is configurable by configuration unit 11. According to an embodiment, the interpolation mode comprises a coefficient repetition mode or a linear interpolation mode. In the coefficient repetition mode, a repetition of coefficients is executed, i.e. each coefficient of the base or grid set of noise cancellation coefficients is repeated a predetermined or preset number of times. In the linear interpolation mode, a linear interpolation is executed. In the linear interpolation, the base or grid set of noise cancellation coefficients is used for generating further interpolated coefficients by generating (a preset number of) new/additional coefficients between two (subsequent) coefficients of the base or grid set of noise cancellation coefficients. According to an embodiment, the linear interpolation comprises execution of one or more known linear interpolation approaches. For example, according to an embodiment polynomial and/or bilinear interpolation are/is executed.

Because according to the present embodiment noise cancellation is executed with regard to each victim separately, a number of interpolation units 14 is provided, wherein each interpolation unit 14 is associated with a corresponding victim, i.e. processes noise cancellation coefficients of the corresponding victim. Thus, the number of interpolation units 14 is adjusted by configuration unit 11 when the maximum number of victims that can be processed by device 1 is set.

Thus, for each coefficient memory block or buffer 12_1, 12_2, ..., 12_N of coefficient memory 12 of the corresponding victim, interpolation unit 12 fetches a base set of noise cancellation coefficients from the corresponding coefficient memory block or buffer 12_1, 12_2, ..., 12_N and generates a corresponding set of intermediate noise cancellation coefficients.

Then a set of noise cancellation coefficients, comprising the interpolated noise cancellation coefficients and coefficients from the base set of noise cancellation coefficients, is provided to a set of multiply-and-accumulate (MAC) units 15. According to the present embodiment, for each victim, a corresponding set of MAC units 15 is provided. Thus, the interpolation unit 14, operating with regard to a victim, provides to a set of (MAC) units 15 that operates with regard to said victim each set of noise cancellation coefficients received by the interpolation of the corresponding base set of noise cancellation coefficients, which is stored in coefficient memory 12 of said victim, in particular in a corresponding coefficient memory block 12_1, 12_2, ..., 12_n of said coefficient memory 12.

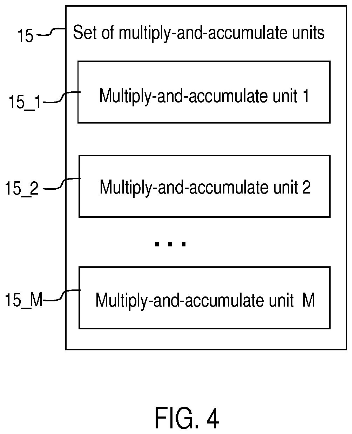

FIG. 4 is a block diagram of a set of MAC units 15 of the number of sets of MAC units 15 according to an embodiment of the present invention.

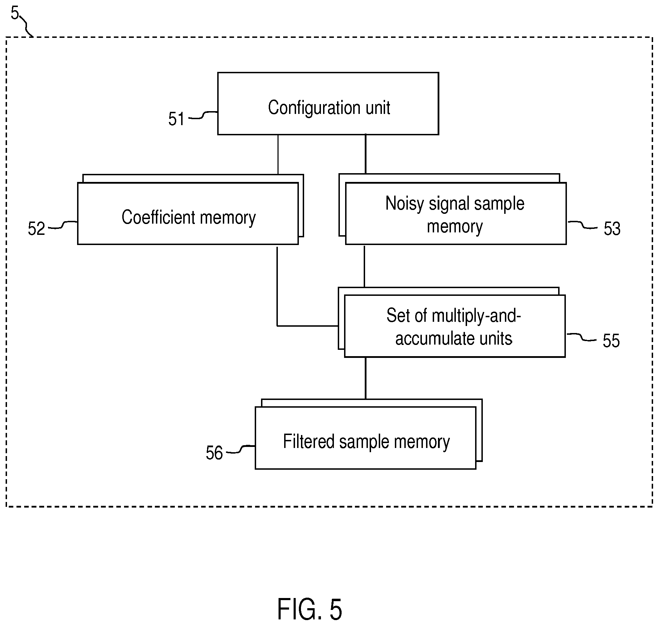

According to the embodiment of FIG. 5, the set of MAC units 15 comprises M MAC units 15_1, 15_2, ..., 15 M configured to execute noise cancelation with regard to one particular or corresponding victim. Each MAC unit 15_1, 15_2, ..., 15_M is configured to receive a set of noise cancellation coefficients from interpolation unit 14 operating with regard to the same victim as MAC unit 15_1, 15_2, ..., 15_M and a set of disturbers from disturber memory 13 storing disturbers of the said victim.

According to the embodiment, each MAC unit 15_1, 15_2, ..., 15_M is configured to cancel noise with regard to a particular or corresponding tone of its victim. Thus, the set of noise cancellation coefficients received from interpolation unit 14 comprises coefficients arranged to cancel noise with regard to the corresponding tone of said victim. The set of noise cancellation coefficients comprises, in turn, coefficients obtained by interpolation unit 14 based on a base set of noise cancellation coefficients that are stored in a coefficient memory block 12_1, 12_2, ..., 12_N referring to said tone of said victim. The set of disturbers received by MAC unit 15_1, 15_2, ..., 15 M refers also the said tone of said victim and is received from a disturber memory block 13_1, 13_2, ..., 13_N referring to said tone of said victim.

Thus, each MAC unit 15_1, 15_2, ..., 15_M is configured to cancel noise with regard to noise cancellation coefficients and disturbers that refer to the same victim and to the same tone as said MAC unit 15_1, 15_2, ..., 15_M.

In general, M is a natural that is equal or greater than one (M ≥ 1). According to an embodiment, M is equal or smaller than 8, and a set of MAC units 15 comprises, e.g., up to 8 MAC units 15_1, 15_2, ..., 15_M. The number of MAC units 15_1, 15_2, ..., 15_M can be set and configured via the configuration unit 11.

In general, a MAC unit 15_1, 15_2, ..., 15_M of a set of MAC units 15 may be arranged as any appropriate known MAC unit used for noise cancellation. Generally, MAC unit 15_1, 15_2, ..., 15_M is a hardware unit that executes a multiply-accumulate operation comprising computations on products of two numbers and adding that products to an accumulator. Thus, MAC unit 15_1, 15_2, ..., 15_M uses the noise cancellation coefficients and determines a noise cancellation signal in view of a corresponding victim, a corresponding tone and corresponding disturbers.

Each MAC unit 15_1, 15_2, ..., 15_M receives a set of noise cancellation coefficients and retrieves the corresponding set of disturbers from the corresponding disturber memory block 13_1, 13_2, ..., 13_N such that both the coefficients and disturbers refer not only to the same victim but also to the same tone. Subsequently, MAC unit 15_1, 15_2, ..., 15_M multiplies the received noise cancellation coefficients for all disturbers of the particular tone of the particular victim. As a result, MAC unit 15_1, 15_2, ..., 15_M provides a corresponding noise cancellation signal or anti-noise signal, respectively, that is generated with regard to a particular victim, with regard to a particular tone of the particular victim and with regard to disturbers of the particular tone of the particular victim.

In each set of MAC units 15, each MAC unit 15_1, 15_2, ..., 15_M cancels noise, i.e. determines the noise cancellation signal with regard to a tone that is different from the tones handled by any other MAC unit 15.

The number of sets of MAC units 15 corresponds to or is equal the maximum number of victims that can be selected for noise cancellation by configuration unit 11, as described above.

After the completion of computations for every tone of a victim in a set of MAC units 15 operating with regard to the victim, either an accumulated result, comprising accumulated results (i.e. noise cancelation signals) of each MAC unit 15_1, 15_2, ..., 15_M of said set 15, can be stored in the result memory 16 or the corresponding tone of victim data is read and added to the canceled result and then stored. This is also configurable by configuration unit 11.

In case of the storage of the accumulated result, according to an embodiment, the cancellation result is stored. In particular, cancellation results, i.e. noise cancelation signals determined by the set of MAC units 15, i.e. MAC units 15_1, 15_2, ..., 15_M with regard to a particular victim are collected by victim/result memory 16. Subsequently, i.e. after completing the determining of cancelation results for the victim, a final cancellation result, i.e. final cancellation signal is calculated (e.g. by applying an accumulation function on the collected cancellation results/signals). The final cancellation result or the final cancellation signal is calculated by a computing unit comprising and/or connected to victim/result memory 16. The calculation is thus executed with regard to all disturbers of the victim.

In the second case of adding noise cancellation results/signals, according to an embodiment, with regard to each noise cancellation result/signal, provided by the set of MAC units 15, i.e. by a MAC unit 15_1, 15_2, ..., 15_M with regard to a particular victim, a stored noise cancellation result/signal, stored with regard to the victim, is read from victim/result memory 16. Then, the noise cancellation result/signal is added to the stored noise cancellation result/signal, and the result of said addition is stored in victim/result memory 16 as the stored noise cancellation result/signal. Also here, the calculations are executed by a computing unit comprising and/or connected to victim/result memory 16. Said calculations are executed with regard to all disturbers of the victim. According to a further embodiment, this approach is executed if the set of MAC units 15 comprises one MAC unit 15_1, 15_2, ..., 15_M only, i.e. if M=1.

As mentioned, according to the present embodiment, several victim/result memories 16 are provided in device 1. For each victim, a corresponding victim/result memory 16 is provided. Thus, the number of victim/result memories 16 corresponds to the number of victims that have been selected for noise cancelation in the configuration process executed by configuration unit 11.

If disturbers are received over a period of time, according to an embodiment, the accumulated result for every interval is added to the previous one. Further, according to an embodiment, compression and decompression of the intermediate result are supported to keep the width of the memory low, i.e. to save the memory space. As outlined above, this can be also configured correspondingly by configuration unit 11.

According to the present embodiment, device 1 further comprises at least one interface (not shown) for receiving and/or transmitting configuration data, coefficient updates, and/or disturber, victim and/or tone data and or updates. Thus, via the at least one interface, noise cancelation coefficients (e.g. base sets of noise cancelation coefficients) for storage in coefficient memory 12, disturber information for storage in disturber memory 13, victim information for storage in victim memory 16 are received. Further, noise cancellation results (e.g., noise cancellation signals determined by MAC units or sets of MAC units 15) are transmitted to further components.

The at least one interface is implemented for accessing a communication media for transmission and/reception purposes. According to an embodiment, device 1 is connected for communication (i.e. reception and transmission) purposes to a data communication media such as a bus, for example. According to a further embodiment, the bus is an AXI (Advanced eXtensible Interface) bus. Here, also further kinds of data communication media and further kinds of buses can be used. Via the data communication media and the at least one interface, a parameterization or configuration of device 1 is executed, wherein corresponding configuration data is transmitted to configuration unit 11.

According to an embodiment, contention between the coefficient update through the at least one interface and coefficient access by MAC units 15_1, 15_2, ..., 15_M or sets of MAC units 15 is arbitrated. According to a further embodiment, access of MAC units 15_1, 15_2, ..., 15_M or sets of MAC units 15 to the coefficient data through the at least one interface (e.g., retrieval of coefficient data) has a higher priority in case of contention.

The above described embodiments can be used, for example, for frequency domain noise cancellation, e.g. with regard to signals received in frequency domain (e.g. by use of frequency division multiple access (FDMA)). At the same time, the above described embodiments of are not restricted with regard to the frequency domain noise cancelation and can be correspondingly applied and/or incorporated in any communication system and with regard to any noise cancelation.

In the following, embodiments that can be applied with regard to noise cancellation in signals received in time domain (e.g. by use of time division multiple access (TDMA)) will be explained in more detail. However, the above described embodiments of are not restricted with regard to the frequency domain noise cancelation and can be correspondingly applied and/or incorporated in any communication system and with regard to any noise cancelation.

FIG. 5 is a block diagram of device 5 arranged to cancel noise present in a received signal according to an embodiment of the present invention.

Device 5 comprises configuration unit 51, arrangement of which is similar to the arrangement of configuration unit 11 of FIG. 1.

In particular, configuration unit 51 is configured to perform a base configuration and/or re-configuration of device 5. According to the present embodiment, configuration unit 51 is configured to select at least one of the following and to configure the device 5 by use of at least one of the following: a (maximum) number of received signals comprising noise, with regard to which device 5 can execute the cancelation of noise during the same noise cancellation process; a (maximum) number of victims, with regard to which device 5 can execute the cancellation of noise during the same noise cancellation process; a (maximum) number of tones, with regard to which the device 5 can execute the cancelation of noise during the same noise cancellation process; a (maximum) number of disturbers, with regard to which the device 5 can execute the cancelation of noise during the same noise cancellation process; an interpolation factor; an interpolation mode; a precision degree of data to be supported by device 5; settings for compression of data when said data is stored in device 5 and settings for decompression of stored data when said stored data is used in device 5.

After the execution of the settings, the configuration unit 51 configures or re-configures, i.e. adjusts device 5 and, in particular, further components of device 5 according to the settings such that subsequent noise cancellation is executed in device 5 by use of said settings. As can be gathered from FIG. 5, said settings configure the operating of coefficient memories 52, noisy signal sample memories 53, sets of MAC units 55 and filtered sample memories 56.

According to embodiment of FIG. 5, noise cancelation is executed on basis of received signals comprising noise. This means that received noisy signals define the organization of data like coefficients and noisy samples of the received noisy signals, and the execution of noise cancellation is executed with regard to each received signal separately. The maximum number of received signals that can be processed by device 5 during the same noise cancellation process is set, according to an embodiment, during the configuration process. The setting of the maximum number of received signals and the corresponding configuration of device 5 are executed by configuration unit 51.

For executing noise cancelation based on received signals, according to the present embodiment, a dedicated memory for every received signal of said number of received signals is used. Thus, a number of coefficient memories 52 is provided, wherein each coefficient memory 12 stores noise cancellation coefficients of a corresponding received signal. Similarly, a number of noisy signal sample memories 53 is provided, wherein each noisy sample memory 53 stores samples of a corresponding received signal. Additionally, a number of filtered sample memories 56 is provided, wherein each filtered sample memory 56 stores results of noise cancellation executed with regard to a corresponding received signal. According to an embodiment, the distribution and/or allocation of corresponding coefficient memories 52, noisy signal sample memories 53 and/or filtered sample memories 56 can be done during the configuration process executed by the configuration unit 51 in response to the set maximum number of received signals that may be handled by device 5 during the same noise cancellation process.

According to the embodiment of FIG. 5, a number of coefficient memories 52 is provided, wherein each coefficient memory provides noise cancellation coefficients that are used for noise cancellation in a particular or corresponding received signal comprising noise. Thus, the number of coefficient memories 52 corresponds to or equals the maximum number of received signals that may be handled by device 5 during the same noise cancellation process. The arrangement of each coefficient memory 52 is different from the arrangements of coefficient memories 12 of FIGs. 1 and 2.

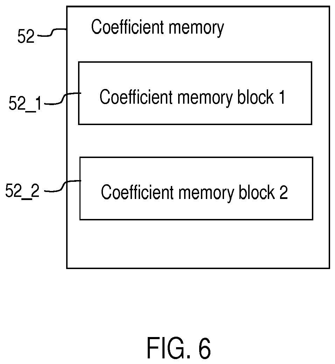

FIG. 6 is a block diagram of coefficient memory 52 according to an embodiment of the present invention. According to the embodiment, coefficient memory 52 is arranged in the form of "ping pong". In particular, coefficient memory 52 comprises two coefficient memory blocks or buffers 52_1, 52_2. According to the present embodiment, when one of the coefficient memory blocks 52_1, 52_2 is accessed by a corresponding MAC unit, another coefficient memory block 52_1, 52_2 is used to update noise cancellation coefficients for a subsequent processing by the MAC unit. Thus, after the MAC unit has finished noise cancelation based on noise cancellation coefficients of one of the two coefficient memory blocks 52_1, 52_2, it continues with the next noise cancelation step based on noise cancellation coefficients of the another one of the two coefficient memory blocks 52_1, 52_2. The one of the two coefficient memory blocks 52_1, 52_2 is not used by the MAC unit and can be updated with further noise cancellation coefficients for a subsequent processing by the MAC unit.

Further, device 5 comprises a number of noisy signal sample memories 53, wherein each noisy signal sample memory 53 is configured to store incoming samples of a corresponding received signal comprising noise. Thus, the number of noisy signal sample memories 53 corresponds to or is equal the maximum number of received signals that may be handled by device 5 during the same noise cancellation process.

Furthermore, device 5 comprises a number of sets of MAC units 55, wherein each set of MAC units 55 refers to or operates with regard to a corresponding received signal.

Each MAC unit of a set of MAC units 55, operating with regard to a particular or corresponding received signal, retrieves noisy signal sample data from noisy signal sample memory 53 that stores samples of the corresponding signal and retrieves noise cancellation coefficients from coefficient memory 52 storing coefficients with regard to the corresponding received signal. Subsequently, each MAC unit of a set of MAC units 55 processes the noise cancellation coefficients and noisy signal samples for canceling noise of the corresponding received signal. The processing can be executed as generally known with regard to MAC units.

For retrieving noise cancellation coefficients from the corresponding coefficient memory 52, corresponding coefficient memory blocks 52_1, 52 2 of coefficient memory 52 are accessed by MAC unit of the set of MAC units 55. Here, MAC unit applies to each noisy sample data consecutively several sets of noise cancellation coefficients, each retrieved by the MAC unit from a corresponding coefficient memory block 52_1, 52_2. As mentioned, the corresponding coefficient memory blocks 52_1, 52_2 are accessed alternately to retrieve the corresponding noise cancelation coefficients.

According to the present embodiment, accumulation of data in a MAC unit happens over a period determined by the order of the noise cancellation filter executed by the MAC unit. The order of the noise cancellation filter can be configured or set by configuration unit 51. Here, any known and appropriate noise cancellation filter can be implemented.

Each MAC unit returns filtered samples as the result of noise cancellation by the MAC unit. The filtered samples are then stored in filtered sample memory 56 that refers to a received signal, with regard to which the corresponding MAC unit operates.

According to an embodiment, only one MAC unit is provided within each set of MAC units 55.

Further, similar to device 1, also device 5 comprises at least one interface for accessing a communication media for transmission and/reception purposes. According to an embodiment, device 5 is connected for communication (i.e. reception and transmission) purposes to a data communication media such as a bus, for example. According to a further embodiment, the bus is an AXI (Advanced eXtensible Interface) bus. Here, also further kinds of data communication media and further kinds of buses can be used. Via the data communication media and the at least one interface, a parameterization or configuration of device 5 is executed, wherein corresponding configuration data is transmitted to configuration unit 51. The at least one interface is used for receiving, for example, coefficient, sample and received signal data. Further, configuration data is received via the at least one interface. Determined noise cancelation results, such as filtered samples and/or noise cancellation signals, for example, can be transmitted via the at least one interface to further components.

Thus, present invention relates to cancelation of noise present in received signals by use of a number of sets of multiply-and-accumulate units, wherein: each set of multiply-and-accumulate units of the number of sets of multiply-and-accumulate units is configured to cancel noise with regard to a corresponding victim, or each set of multiply-and-accumulate units of the number of sets of multiply-and-accumulate units is configured to cancel noise with regard to a corresponding received signal comprising noise. The number of sets of multiply-and-accumulate units corresponds to a maximum number of victims that can be processed during the same noise cancellation processor to a maximum number of received signals comprising noise that can be processed during the same noise cancellation process.

It has to be noted that although above presented embodiments referring in general to embodiment of FIG. 1 or to embodiment of FIG. 5 are presented in a separate way, for sake of better understanding, an implementation that combines both embodiments is possible. Thus, both embodiments may be implemented in one device, for example. Further, by use of configuration parameters, allocation of corresponding memories, interpolation units and MACs can be executed dynamically and in view of current application of the device. For example, if noise cancellation according to embodiment of FIG. 1 is preferred, a corresponding allocation of necessary components, e.g., memories, interpolation units and MACs will be executed in view of correspondingly arranged configuration settings. If, in turn, noise cancellation according to embodiment of FIG. 5 is preferred, a corresponding allocation of necessary components, e.g., memories and MACs will be executed in view of correspondingly arranged configuration settings. As mentioned, an allocation of necessary components can be done also with regard to both embodiments, such that both ways of noise cancellation can be executed in parallel and/or sequentially. According to an embodiment, static random-access memories (SRAMs) can be used for allocating said memories, wherein the use of further kinds of memories is also possible and supported.

Further, although the invention has been shown and described with respect to certain preferred embodiments, equivalents and modifications will occur to others skilled in the art upon the reading and understanding of the specification. The present invention includes all such equivalents and modifications, and is limited only by the scope of the following claims.

## Claims

1. A device arranged to cancel noise present in received signals, wherein the device comprises
a number of sets of multiply-and-accumulate units (15), wherein:
each set of multiply-and-accumulate units (15) of the number of sets of multiply-and-accumulate units (15) is configured to cancel noise with regard to a corresponding victim that is a line affected adversely by the noise, or
each set of multiply-and-accumulate units (15) of the number of sets of multiply-and-accumulate units (15) is configured to cancel noise with regard to a corresponding received signal comprising noise;
wherein the number of sets of multiply-and-accumulate units (15) corresponds to a maximum number of victims that the device is configured to process during a same noise cancellation process,
**characterized in that**
the device comprises the following: a number of coefficient memories (12), wherein each coefficient memory (12) stores noise cancellation coefficients of a corresponding victim, a number of disturber memories (13), wherein each disturber memory (13) stores information on disturbers of a corresponding victim, and a number of victim/result memories (16), wherein each victim/result memory (16) stores victim data and results of noise cancellation of a corresponding victim, wherein the number of coefficient memories (12), the number of disturber memories (13) and the number of victim/result memories (16) correspond to the maximum number of victims and wherein each of the number of coefficient memories (12), the number of disturber memories (13) and the number of victim/result memories (16) is associated with a corresponding victim.

2. The device according to claim 1, wherein:
if each set of multiply-and-accumulate units (15) of the number of sets of multiply-and-accumulate units (15) is configured to cancel noise with regard to a corresponding victim:
each coefficient memory (12) of the number of coefficient memories (12) comprises a set of coefficient memory blocks, wherein each coefficient memory block comprises a set of noise cancellation coefficients configured to cancel noise in a received signal with regard to a corresponding tone of the corresponding victim and wherein each disturber memory block comprises a set of disturbers of a corresponding tone of the corresponding victim; or
if each set of multiply-and-accumulate units (15) of the number of sets of multiply-and-accumulate units (15) is configured to cancel noise with regard to a corresponding received signal comprising noise, each coefficient memory (12) of the number of coefficient memories (12) comprises two coefficient memory blocks.

3. The device according to any of the preceding claims, wherein the device comprises a number of interpolation units (14), wherein the number of interpolation units (14) corresponds to the maximum number of victims and wherein each of the number of interpolation units is associated with a corresponding victim and is configured to generate a corresponding set of noise cancellation coefficients for noise cancellation in the corresponding victim by interpolating a base set of noise cancellation coefficients.

4. The device according to claim 2 or 3, wherein each coefficient memory block of a coefficient memory (12) of the number of coefficient memories (12) comprises a base set of coefficient memory blocks.

5. The device according to claim 3 or 4, wherein each set of multiply-and-accumulate units (15) associated with a corresponding victim is configured to receive the set of noise cancellation coefficients from an interpolation unit associated with the corresponding victim.

6. The device according to any one of claims 3 to 5, wherein each multiply-and-accumulate unit (15) of each set of multiply-and-accumulate units (15) associated with a corresponding victim is configured to cancel noise with regard to a particular tone of the corresponding victim.

7. The device according to any one of claims 1 to 6, wherein each multiply-and-accumulate unit (15) of each set of multiply-and-accumulate units (15) associated with a corresponding victim is configured to receive disturbers, with regard to which noise cancelation is executed by the corresponding multiply-and-accumulate unit (15), from a disturber memory (13) of the number of disturber memories (13) that is associated with the corresponding victim.

8. The device according to claim 2, wherein each multiply-and-accumulate unit (15) of each set of multiply-and-accumulate units (15) associated with a corresponding received signal comprising noise is configured to receive a noise cancelation coefficients alternately from a first or from a second coefficient memory block of the two coefficient memory blocks of the coefficient memory (12) associated with the corresponding received signal comprising noise.

9. The device according to claim 1, 2 or 8, wherein each multiply-and-accumulate unit (15) of each set of multiply-and-accumulate units (15) associated with a corresponding received signal comprising noise is configured to receive samples of the received signal from of the noisy sample memory associated with the received signal.

10. The device according to any one of the preceding claims, wherein the device comprises a configuration unit arranged to select at least one of the following and to configure the device by use of at least one of the following:
a number of victims, with regard to which the device can execute the cancellation of noise during the same noise cancellation process;
a number of tones, with regard to which the device can execute the cancelation of noise during the same noise cancellation process;
a number of disturbers, with regard to which the device can execute the cancelation of noise during the same noise cancellation process;
a number of received signals comprising noise, with regard to which the device can execute the cancellation of noise during the same noise cancellation process;
an interpolation factor;
an interpolation mode;
a precision degree of data to be supported by the device;
settings for compression of data when said data is stored in the device and settings for decompression of stored data when said stored data is used in the device.

11. A method arranged to cancel noise present in received signals, wherein the method comprises steps of:
canceling noise, by a number of sets of multiply-and-accumulate units (15), wherein:
each set of multiply-and-accumulate units (15) of the number of sets of multiply-and-accumulate units (15) cancels noise with regard to a corresponding victim that is a line affected adversely by the noise, or
each set of multiply-and-accumulate units (15) of the number of sets of multiply-and-accumulate units (15) cancels noise with regard to a corresponding received signal comprising noise;
wherein the number of sets of multiply-and-accumulate units (15) corresponds to a maximum number of victims that can be processed during a same noise cancellation process,
wherein the method is **characterized by** using the following: a number of coefficient memories (12), wherein each coefficient memory (12) stores noise cancellation coefficients of a corresponding victim, a number of disturber memories (13), wherein each disturber memory (13) stores information on disturbers of a corresponding victim, and a number of victim/result memories (16), wherein each victim/result memory (16) stores victim data and results of noise cancellation of a corresponding victim, wherein the number of coefficient memories (12), the number of disturber memories (13) and the number of victim memories (16) correspond to the maximum number of victims and wherein each of the number of coefficient memories (12), the number of disturber memories (13) and the number of victim/result memories (16) is associated with a corresponding victim.

12. A computer program product comprising computer readable program code that is configured to cause a computing device to execute steps of method of claim 11.

13. A computer-readable recording medium configured to store therein a computer program product, which comprises a computer readable program code that is configured to cause a computing device to execute steps of method of claim 11.

## Patentansprüche

1. Vorrichtung, die dazu ausgebildet ist, in empfangenen Signalen vorhandene Geräusche zu unterdrücken, wobei die Vorrichtung Folgendes umfasst:
eine Anzahl von Sätzen von Multiplizier-Akkumulier-Einheiten (15), wobei:
jeder Satz von Multiplizier-Akkumulier-Einheiten (15) der Anzahl von Sätzen von Multiplizier-Akkumulier-Einheiten (15) dazu ausgelegt ist, Geräusche im Hinblick auf ein entsprechendes Opfer, das eine von dem Geräusch beeinträchtigte Leitung ist, zu unterdrücken, oder
jeder Satz von Multiplizier-Akkumulier-Einheiten (15) der Anzahl von Sätzen von Multiplizier-Akkumulier-Einheiten (15) dazu ausgelegt ist, Geräusche im Hinblick auf ein entsprechendes empfangenes und Geräusche enthaltendes Signal zu unterdrücken;
wobei die Anzahl von Sätzen von Multiplizier-Akkumulier-Einheiten (15) einer Maximalzahl von Opfern entspricht, die dazu vorgesehen sind, von der Vorrichtung während eines gleichen Geräuschunterdrückungsvorgangs verarbeitet zu werden,
**dadurch gekennzeichnet, dass**
die Vorrichtung Folgendes umfasst: eine Anzahl von Koeffizientspeichern (12), wobei jeder Koeffizientspeicher (12) Geräuschunterdrückungskoeffizienten eines entsprechenden Opfers speichert, eine Anzahl von Störerspeichern (13), wobei jeder Störerspeicher (13) Informationen über Störer eines entsprechenden Opfers speichert, und eine Anzahl von Opfer-/Ergebnisspeichern (16), wobei jeder Opfer-/Ergebnisspeicher (16) Opferdaten und Ergebnisse der Geräuschunterdrückung eines entsprechenden Opfers speichert, wobei die Anzahl von Koeffizientspeichern (12), die Anzahl von Störerspeichern (13) und die Anzahl von Opfer-/Ergebnisspeichern (16) der Maximalzahl von Opfern entspricht, und wobei jede der Anzahl von Koeffizientspeichern (12), der Anzahl von Störerspeichern (13) und der Anzahl von Opfer-/Ergebnisspeichern (16) mit einem entsprechenden Opfer verbunden ist.

2. Vorrichtung gemäß Anspruch 1, wobei:
falls jeder Satz von Multiplizier-Akkumulier-Einheiten (15) der Anzahl von Sätzen von Multiplizier-Akkumulier-Einheiten (15) dazu ausgelegt ist, Geräusche im Hinblick auf ein entsprechendes Opfer zu unterdrücken:
jeder Koeffizientspeicher (12) der Anzahl von Koeffizientspeichern (12) einen Satz von Koeffizientspeicherblöcken umfasst, wobei jeder Koeffizientspeicherblock einen Satz von Geräuschunterdrückungskoeffizienten umfasst, die dazu ausgelegt sind, Geräusche in einem empfangenen Signal im Hinblick auf einen entsprechenden Ton des entsprechenden Opfers zu unterdrücken, und wobei jeder Störerspeicherblock einen Satz von Störern eines entsprechenden Tons des entsprechenden Opfers umfasst; oder
falls jeder Satz von Multiplizier-Akkumulier-Einheiten (15) der Anzahl von Sätzen von Multiplizier-Akkumulier-Einheiten (15) dazu ausgelegt ist, Geräusche im Hinblick auf ein entsprechendes empfangenes und Geräusche enthaltendes Signal zu unterdrücken, jeder Koeffizientspeicher (12) der Anzahl von Koeffizientspeichern (12) zwei Koeffizientspeicherblöcke umfasst.

3. Vorrichtung gemäß einem der vorhergehenden Ansprüche, wobei die Vorrichtung eine Anzahl von Interpolationseinheiten (14) umfasst, wobei die Anzahl von Interpolationseinheiten (14) der Maximalzahl von Opfern entspricht, und wobei jede der Anzahl von Interpolationseinheiten mit einem entsprechenden Opfer verbunden ist und dazu ausgelegt ist, einen entsprechenden Satz von Geräuschunterdrückungskoeffizienten für Geräuschunterdrückung in dem entsprechenden Opfer durch Interpolieren eines Basissatzes von Geräuschunterdrückungskoeffizienten zu erzeugen.

4. Vorrichtung gemäß Anspruch 2 oder 3, wobei jeder Koeffizientspeicherblock eines Koeffizientspeichers (12) der Anzahl von Koeffizientspeichern (12) einen Basissatz von Koeffizientspeicherblöcken umfasst.

5. Vorrichtung gemäß Anspruch 3 oder 4, wobei jeder Satz von Multiplizier-Akkumulier-Einheiten (15), die mit einem entsprechenden Opfer verbunden sind, dazu ausgelegt ist, den Satz von Geräuschunterdrückungskoeffizienten von einer mit dem entsprechenden Opfer verbundenen Interpolationseinheit zu empfangen.

6. Vorrichtung gemäß einem der Ansprüche 3 bis 5, wobei jede Multiplizier-Akkumulier-Einheit (15) jedes Satzes von Multiplizier-Akkumulier-Einheiten (15), die mit einem entsprechenden Opfer verbunden sind, dazu ausgelegt ist, Geräusche im Hinblick auf einen bestimmten Ton des entsprechenden Opfers zu unterdrücken.

7. Vorrichtung gemäß einem der Ansprüche 1 bis 6, wobei jede Multiplizier-Akkumulier-Einheit (15) jedes Satzes von Multiplizier-Akkumulier-Einheiten (15), die mit einem entsprechenden Opfer verbunden sind, dazu ausgelegt ist, Störer im Hinblick darauf, welche Geräuschunterdrückung durch die entsprechende Multiplizier-Akkumulier-Einheit (15) ausgeführt wird, von einem Störerspeicher (13) der Anzahl von Störerspeichern (13), die mit dem entsprechenden Opfer verbunden sind, zu empfangen.

8. Vorrichtung gemäß Anspruch 2, wobei jede Multiplizier-Akkumulier-Einheit (15) jedes Satzes von Multiplizier-Akkumulier-Einheiten (15), die mit einem entsprechenden empfangenen und Geräusche enthaltenden Signal verbunden sind, dazu ausgelegt ist, Geräuschunterdrückungskoeffizienten abwechselnd von einem ersten oder von einem zweiten Koeffizientspeicherblock der zwei Koeffizientspeicherblöcke des Koeffizientspeichers (12), der mit dem entsprechenden empfangenen und Geräusche enthaltenden Signal verbunden ist, zu empfangen.

9. Vorrichtung gemäß Anspruch 1, 2 oder 8, wobei jede Multiplizier-Akkumulier-Einheit (15) jedes Satzes von Multiplizier-Akkumulier-Einheiten (15), die mit einem entsprechenden empfangenen und Geräusche enthaltenden Signal verbunden sind, dazu ausgelegt ist, Proben des empfangenen Signals von dem mit dem empfangenen Signal verbundenen Geräuschprobenspeicher zu empfangen.

10. Vorrichtung gemäß einem der vorhergehenden Ansprüche, wobei die Vorrichtung eine Konfigurationseinheit umfasst, die dazu ausgebildet ist, mindestens eines der folgenden Elemente auszuwählen und die Vorrichtung unter Verwendung von mindestens einem der folgenden Elemente zu konfigurieren:
eine Anzahl von Opfern, hinsichtlich derer die Vorrichtung die Geräuschunterdrückung während des gleichen Geräuschunterdrückungsvorgangs ausführen kann;
eine Anzahl von Tönen, hinsichtlich derer die Vorrichtung die Geräuschunterdrückung während des gleichen Geräuschunterdrückungsvorgangs ausführen kann;
eine Anzahl von Störern, hinsichtlich derer die Vorrichtung die Geräuschunterdrückung während des gleichen Geräuschunterdrückungsvorgangs ausführen kann;
eine Anzahl von empfangenen und Geräusche enthaltenden Signalen, hinsichtlich derer die Vorrichtung die Geräuschunterdrückung während des gleichen Geräuschunterdrückungsvorgangs ausführen kann;
einen Interpolationsfaktor;
einen Interpolationsmodus;
einen Präzisionsgrad von Daten, die von der Vorrichtung zu unterstützen sind;
Einstellungen für die Komprimierung von Daten, wenn die Daten in der Vorrichtung gespeichert werden, und Einstellungen für die Dekomprimierung von gespeicherten Daten, wenn die gespeicherten Daten in der Vorrichtung verwendet werden.

11. Verfahren, das dazu ausgebildet ist, in empfangenen Signalen vorhandene Geräusche zu unterdrücken, wobei das Verfahren die folgenden Schritte umfasst:
Geräuschunterdrückung durch eine Anzahl von Sätzen von Multiplizier-Akkumulier-Einheiten (15), wobei:
jeder Satz von Multiplizier-Akkumulier-Einheiten (15) der Anzahl von Sätzen von Multiplizier-Akkumulier-Einheiten (15) Geräusche im Hinblick auf ein entsprechendes Opfer, das eine von dem Geräusch beeinträchtigte Leitung ist, unterdrückt, oder
jeder Satz von Multiplizier-Akkumulier-Einheiten (15) der Anzahl von Sätzen von Multiplizier-Akkumulier-Einheiten (15) Geräusche im Hinblick auf ein entsprechendes empfangenes und Geräusche enthaltendes Signal unterdrückt,
wobei die Anzahl von Sätzen von Multiplizier-Akkumulier-Einheiten (15) einer Maximalzahl von Opfern entspricht, die während eines gleichen Geräuschunterdrückungsvorgangs verarbeitet werden können, wobei das Verfahren durch Verwendung von Folgendem gekennzeichnet ist:
eine Anzahl von Koeffizientspeichern (12), wobei jeder Koeffizientspeicher (12) Geräuschunterdrückungskoeffizienten eines entsprechenden Opfers speichert, eine Anzahl von Störerspeichern (13), wobei jeder Störerspeicher (13) Informationen über Störer eines entsprechenden Opfers speichert, und eine Anzahl von Opfer-/Ergebnisspeichern (16), wobei jeder Opfer-/Ergebnisspeicher (16) Opferdaten und Ergebnisse der Geräuschunterdrückung eines entsprechenden Opfers speichert, wobei die Anzahl von Koeffizientspeichern (12), die Anzahl von Störerspeichern (13) und die Anzahl von Opfer-/Ergebnisspeichern (16) der Maximalzahl von Opfern entspricht, und wobei jede der Anzahl von Koeffizientspeichern (12), der Anzahl von Störerspeichern (13) und der Anzahl von Opfer-/Ergebnisspeichern (16) mit einem entsprechenden Opfer verbunden ist.

12. Computerprogrammprodukt, das computerlesbaren Programmcode umfasst, der dazu ausgelegt ist, eine Rechenvorrichtung zu veranlassen, Schritte des Verfahrens von Anspruch 11 auszuführen.

13. Computerlesbares Aufzeichnungsmedium, das dazu ausgelegt ist, ein Computerprogrammprodukt zu speichern, das einen computerlesbaren Programmcode umfasst, der dazu ausgelegt ist, eine Rechenvorrichtung zu veranlassen, Schritte des Verfahrens von Anspruch 11 auszuführen.

## Revendications

1. Dispositif conçu pour annuler un bruit présent dans des signaux reçus, le dispositif comprenant :
un nombre d'ensembles d'unités de multiplication et de cumul (15),
chaque ensemble d'unités de multiplication et de cumul (15) du nombre d'ensembles d'unités de multiplication et de cumul (15) étant configuré pour annuler un bruit en ce qui concerne une victime correspondante qui est une ligne pénalisée par le bruit, ou
chaque ensemble d'unités de multiplication et de cumul (15) du nombre d'ensembles d'unités de multiplication et de cumul (15) étant configuré pour annuler un bruit en ce qui concerne un signal reçu correspondant comprenant un bruit ;
le nombre d'ensembles d'unités de multiplication et de cumul (15) correspondant à un nombre maximum de victimes que le dispositif peut traiter, compte tenu de sa configuration, pendant un même processus d'annulation de bruit,
le dispositif étant **caractérisé en ce que** :
le dispositif comprend les éléments suivants : un nombre de mémoires de coefficients (12), chaque mémoire de coefficients (12) stockant de coefficients d'annulation de bruit d'une victime correspondante ; un nombre de mémoires de perturbateurs (13), chaque mémoire de perturbateurs (13) stockant une information sur des perturbateurs d'une victime correspondante ; et un nombre de mémoires de victimes/résultats (16), chaque mémoire de victimes/résultats (16) stockant des données de victime et des résultats d'annulation de bruit d'une victime correspondante,
le nombre de mémoires de coefficients (12), le nombre de mémoires de perturbateurs (13) et le nombre de mémoires de victimes/résultats (16) correspondant au nombre maximum de victimes, et chaque mémoire du nombre de mémoires de coefficients (12), du nombre de mémoires de perturbateurs (13) et du nombre de mémoires de victimes/résultats (16) étant associée à une victime correspondante.

2. Dispositif selon la revendication 1, dans lequel :
si chaque ensemble d'unités de multiplication et de cumul (15) du nombre d'ensembles d'unités de multiplication et de cumul (15) est configuré pour annuler un bruit en ce qui concerne une victime correspondante, chaque mémoire de coefficients (12) du nombre de mémoires de coefficients (12) comprend un ensemble de blocs de mémoire de coefficients,
chaque bloc de mémoire de coefficients comprenant un ensemble de coefficients d'annulation de bruit configurés pour annuler un bruit dans un signal reçu en ce qui concerne une tonalité correspondante de la victime correspondante, et chaque bloc de mémoire de perturbateurs comprenant un ensemble de perturbateurs d'une tonalité correspondante de la victime correspondante ; ou
si chaque ensemble d'unités de multiplication et de cumul (15) du nombre d'ensembles d'unités de multiplication et de cumul (15) est configuré pour annuler un bruit en ce qui concerne un signal reçu correspondant comprenant du bruit, chaque mémoire de coefficients (12) du nombre de mémoires de coefficients (12) comprend deux blocs de mémoire de coefficients.

3. Dispositif selon l'une quelconque des revendications précédentes, le dispositif comprenant un nombre d'unités d'interpolation (14), le nombre d'unité d'interpolation (14) correspondant au nombre maximum de victimes, et chaque unité d'interpolation du nombre d'unités d'interpolation étant associée à une victime correspondante et étant configurée pour générer un ensemble correspondant de coefficients d'annulation de bruit pour annuler un bruit dans la victime correspondante en interpolant un ensemble de base de coefficients d'annulation de bruit.

4. Dispositif selon la revendication 2 ou 3, dans lequel chaque bloc de mémoire de coefficients d'une mémoire de coefficients (12) du nombre de mémoires de coefficients (12) comprend un ensemble de base de blocs de mémoire de coefficients.

5. Dispositif selon la revendication 3 ou 4, dans lequel chaque ensemble d'unités de multiplication et de cumul (15) associé à une victime correspondante est configuré pour recevoir l'ensemble de coefficients d'annulation de bruit en provenance d'une unité d'interpolation associée à la victime correspondante.

6. Dispositif selon l'une quelconque des revendications 3 à 5, dans lequel chaque unité de multiplication et de cumul (15) de chaque ensemble d'unités de multiplication et de cumul (15) associé à une victime correspondante est configurée pour annuler un bruit en ce qui concerne une tonalité particulière de la victime correspondante.

7. Dispositif selon l'une quelconque des revendications 1 à 6, dans lequel chaque unité de multiplication et de cumul (15) de chaque ensemble d'unités de multiplication et de cumul (15) associé à une victime correspondante est configurée pour recevoir des perturbateurs, à l'égard duquel une annulation de bruit est exécutée par l'unité de multiplication et de cumul (15) correspondante, en provenance d'une mémoire de perturbateurs (13) du nombre de mémoires de perturbateurs (13) qui est associé à la victime correspondante.

8. Dispositif selon la revendication 2, dans lequel chaque unité de multiplication et de cumul (15) de chaque ensemble d'unités de multiplication et de cumul (15) associé à un signal reçu correspondant comprenant un bruit est configurée pour recevoir, en alternance, des coefficients d'annulation de bruit en provenance d'un premier ou d'un second bloc de mémoire de coefficients des deux blocs de mémoire de coefficients de la mémoire de coefficients (12) associée au signal reçu correspondant comprenant un bruit.

9. Dispositif selon la revendication 1, 2 ou 8, dans lequel chaque unité de multiplication et de cumul (15) de chaque ensemble d'unités de multiplication et de cumul (15) associé à un signal reçu correspondant comprenant un bruit est configurée pour recevoir des échantillons du signal reçu en provenance de la mémoire d'échantillons de bruit associée au signal reçu.

10. Dispositif selon l'une quelconque des revendications précédentes, le dispositif comprenant une unité de configuration conçue pour sélectionner au moins un des éléments suivants et pour configurer le dispositif au moyen d'au moins un des éléments suivants :
un nombre de victimes, à l'égard duquel le dispositif peut exécuter l'annulation de bruit pendant le même processus d'annulation de bruit ;
un nombre de tonalités, à l'égard duquel le dispositif peut exécuter l'annulation de bruit pendant le même processus d'annulation de bruit ;
un nombre de perturbateurs, à l'égard duquel le dispositif peut exécuter l'annulation de bruit pendant le même processus d'annulation de bruit ;
un nombre de signaux reçus comprenant un bruit, à l'égard duquel le dispositif peut exécuter l'annulation de bruit pendant le même processus d'annulation de bruit ;
un facteur d'interpolation ;
un mode d'interpolation ;
un degré de précision de données qui doivent être prises en charge par le dispositif ;
des réglages pour la compression de données quand lesdites données sont stockées dans le dispositif, et des réglages pour la décompression de données stockées quand lesdites données stockées sont utilisées dans le dispositif.

11. Procédé conçu pour annuler un bruit présent dans des signaux reçus, le procédé comprenant les étapes consistant à :
annuler un bruit, par un nombre d'ensembles d'unités de multiplication et de cumul (15),
chaque ensemble d'unités de multiplication et de cumul (15) du nombre d'ensembles d'unités de multiplication et de cumul (15) annulant un bruit en ce qui concerne une victime correspondante qui est une ligne pénalisée par le bruit, ou
chaque ensemble d'unités de multiplication et de cumul (15) du nombre d'ensembles d'unités de multiplication et de cumul (15) annulant un bruit en ce qui concerne un signal reçu correspondant comprenant un bruit ;
le nombre d'ensembles d'unités de multiplication et de cumul (15) correspondant à un nombre maximum de victimes qui peuvent être traitées pendant un même processus d'annulation de bruit,
le procédé étant **caractérisé par** l'étape consistant à utiliser les éléments suivants : un nombre de mémoires de coefficients (12), chaque mémoire de coefficients (12) stockant de coefficients d'annulation de bruit d'une victime correspondante ; un nombre de mémoires de perturbateurs (13), chaque mémoire de perturbateurs (13) stockant une information sur des perturbateurs d'une victime correspondante ; et un nombre de mémoires de victimes/résultats (16), chaque mémoire de victimes/résultats (16) stockant des données de victime et des résultats d'annulation de bruit d'une victime correspondante,
le nombre de mémoires de coefficients (12), le nombre de mémoires de perturbateurs (13) et le nombre de mémoires de victimes (16) correspondant au nombre maximum de victimes, et chaque mémoire du nombre de mémoires de coefficients (12), du nombre de mémoires de perturbateurs (13) et du nombre de mémoires de victimes/résultats (16) étant associée à une victime correspondante.

12. Produit de programme informatique, comprenant un code de programme lisible par ordinateur qui est configuré pour amener un dispositif informatique à exécuter les étapes du procédé selon la revendication 11.

13. Support d'enregistrement lisible par ordinateur, configuré pour stocker un produit de programme informatique qui comprend un code de programme lisible par ordinateur qui est configuré pour amener un dispositif informatique à exécuter les étapes du procédé selon la revendication 11.
